# EUROPÄISCHE PATENTSCHRIFT

(11) **EP 3 484 600 B1**
(45) Veröffentlichungstag und Bekanntmachung des Hinweises auf die Patenterteilung: **05.05.2021**
(21) Anmeldenummer: 17777768.7
(22) Anmeldetag: 08.07.2017
(51) Int. Cl.: B01D 45/04, B01D 45/08

(54) **TROPFENABSCHEIDER MIT INTERNER ENTWÄSSERUNG**
MIST ELIMINATOR WITH INTERNAL DRAINAGE
SÉPARATEUR DE GOUTTES MUNIE D'UN DRAINAGE INTERNE

(30) Priorität: 15.07.2016 DE 102016008623
(43) Veröffentlichungstag der Anmeldung: 22.05.2019
(73) Patentinhaber: Munters Euroform GmbH, 52068 Aachen (DE)
(72) Erfinder: WANDRES, Peter, 52066 Aachen (DE); SHAHNAZIAN, Hamid, 45239 Essen (DE); SCHMITZ, Jürgen, 52070 Aachen (DE); GRIEPENTROG, Wieland, 4721 Kelmis (BE); SCHIEREN, Willi, 52072 Aachen (DE)
(74) Vertreter: Hauck Patentanwaltspartnerschaft mbB
(86) Internationale Anmeldenummer: PCT/DE2017/000203
(87) Internationale Veröffentlichungsnummer: WO 2018/010710

(56) Entgegenhaltungen:
- DE-A1- 2 148 079
- DE-A1- 19 954 128
- DE-A1-102006 011 185
- US-A1- 2007 137 154
- US-A1- 2012 111 762

## Beschreibung

Die vorliegende Erfindung betrifft einen Tropfenabscheider mit einer Vielzahl von nebeneinander angeordneten Lamellenprofilen, die zwischen sich Strömungskanäle für eine feststoff- und/oder flüssigkeitsbeladene Gasströmung bilden, wobei jedes Lamellenprofil mit einer im unteren Bereich des jeweiligen Strömungskanals angeordneten Entwässerungsrinne mit Öffnung nach oben versehen ist.

Bei derartigen Lamellen-Tropfenabscheidern werden die Tropfen, die in der Gasströmung enthalten sind, in den Strömungsumlenkungen, die von den Lamellen erzwungen werden, auf die Lamellenoberfläche abgeschieden. Die dabei gebildeten Flüssigkeitsfilme fließen auf der Lamellenoberfläche unter Schwerkrafteinfluss ab. Abgeschiedene Feststoffpartikel werden dabei mitgeführt.

Derartige Lamellen-Tropfenabscheider werden insbesondere in den Waschtürmen von Rauchgasentschwefelungsanlagen eingesetzt. Nebeneinander angeordnete Lamellenprofile bilden dabei Lamellenprofilpakete, die vorzugsweise schräg angeordnet sind und mit entgegengesetzt geneigt angeordneten Lamellenprofilpaketen V-förmige oder dachförmige Tropfenabscheiderlagen bilden. Dabei können mehrere Lagen übereinander angeordnet sein, die entsprechende Grobabscheider und Feinabscheider bilden. Mehrere übereinander angeordnete Tropfenabscheiderlagen können hierbei parallel aber auch entgegengesetzt zueinander angeordnet sein. Dabei haben sich bestimmte Anstellwinkel, beispielsweise ein Anstellwinkel von 37,5°, als vorteilhaft erwiesen, um einerseits eine gute Abscheidungsleistung zu erzielen, andererseits aber auch ein gutes Reinigungsvermögen zu besitzen. Derartige Tropfenabscheider müssen nämlich in zeitlichen Abständen gereinigt werden, um an den Lamellenprofilen gebildete Inkrustationen zu beseitigen. Hierbei werden die Tropfenabscheider sowohl von der Unterseite als auch von der Oberseite her mit Sprühwasser von Sprüheinrichtungen beaufschlagt. Dabei spielt es für die Funktionsfähigkeit der Abscheider eine Rolle, dass neben der aus dem Gasstrom abgeschiedenen Flüssigkeit auch das entsprechende Spülwasser einwandfrei abgeführt werden kann.

Je steiler die Tropfenabscheiderpakete bei derartigen V-förmig oder dachförmig ausgebildeten Tropfenabscheidern angeordnet sind, desto besser funktioniert die entsprechende Entwässerung. Bei dachförmig angeordneten Abscheidern läuft das Wasser vom Scheitelpunkt in seitlicher Richtung nach unten und wird am unteren Ende der entsprechenden Lamellen abgeführt. Bei V-förmig angeordneten Abscheidern läuft das Wasser schräg nach unten bis zur Mitte und wird dort abgeführt. Wenn zwei Tropfenabscheiderlagen übereinander angeordnet sind, kann bei entgegengesetzter Neigung der oberen und unteren Lamellenprofile das Spülwasser der oberen Tropfenabscheiderlage auch über die untere Abscheiderlage geführt werden, so dass sich hier ein verbesserter Reinigungseffekt erzielen lässt.

Ein großer Anstellwinkel bewirkt somit eine gute Reinigung bzw. Entwässerung der einzelnen Lamellenprofile. Eine solche Anordnung hat jedoch den Nachteil, dass der V-förmig oder dachförmig ausgebildete Tropfenabscheider eine relativ große Bauhöhe besitzt, was letztendlich nachteilig ist, weil für derartige Abscheider möglichst wenig Platz benötigt werden soll.

Des Weiteren können mit den jetzt gängigen Anstellwinkeln die hohen Anströmgeschwindigkeiten realisiert werden, die gute Leistungsdaten des Abscheiders begünstigen.

In der US 2012/111762 A1 geht es nicht um die Handhabung einer von unten eingeführten Flüssigkeit (Spülflüssigkeit), sondern Flüssigkeit wird nur von oben eingeführt, während von unten lediglich Dampf eingeführt wird. Ferner besitzt das hier beschriebene Lamellenprofil keine zwei Umlenkstellen. Auch fehlt eine Nase mit Abtropfkante.

Die US 2007/137154 A1 betrifft einen Tropfenabscheider mit horizontal gerichteter Gasströmung.

Bei der in der DE 21 48 079 A1 beschriebenen Vorrichtung bleibt unklar, ob diese vertikal oder horizontal durchströmt wird. Im Übrigen ist dort nur von Fangrinnen die Rede, die sich entgegengesetzt zur Strömungsrichtung öffnen. Entwässerungsrinnen sind hier nicht erwähnt.

Aus der EP 0 518 221 A1 ist ein Tropfenabscheider bekannt, der Lamellenprofile besitzt, welche Fangtaschen für aus einer feststoff- und/oder flüssigkeitsbeladenen Gasströmung abzuscheidende Tropfen aufweisen. Jede Lamelle besitzt hierbei mindestens zwei Fangtaschen, welche derart angeordnet und ausgebildet sind, dass ihre Orthogonal-Projektion auf die Eintrittsebene das Strömungsfeld im Wesentlichen überdeckt.

Aus der DE 199 54 128 A1 ist ein integriertes System aus Tropfenabscheider und Trennboden bekannt, wobei Tropfenabscheider und Trennboden eine baugleiche Einheit bilden. Hierbei sind Lamellen vorgesehen, die höhenversetzt angeordnete Auffangrillen aufweisen. Eine Auswölbung bildet hier eine Engstelle, wobei der im Bereich der Engstelle abfließende Tropfen, der in diesem entsprechenden Bereich abgeschieden werden soll, nicht in den darunterliegenden Bereich fließen kann, sondern in eine auf der anderen Seite des entsprechenden Strömungskanals angeordnete Entwässerungsrinne abgeschleudert wird. Weitere Tropfenabscheider, die mit Fangtaschen versehene Lamellenprofile besitzen, sind beispielsweise aus der EP 0 272 765 A1 und der EP 0 263 930 A1 bekannt.

Es besteht daher ein Bedarf, derartige Tropfenabscheider so zu optimieren, dass sie bei im Wesentlichen gleich guten Leistungsdaten eine geringere Bauhöhe aufweisen. Der vorliegenden Erfindung liegt daher die Aufgabe zugrunde, einen Tropfenabscheider der eingangs beschriebenen Art zur Verfügung zu stellen, der sich sowohl durch gute Leistungsdaten als auch durch gute Reinigungsmöglichkeiten, insbesondere einen guten Flüssigkeitsablauf, auszeichnet, um auf diese Weise eine möglichst geringe Bauhöhe zu ermöglichen.

Diese Aufgabe wird erfindungsgemäß bei einem Tropfenabscheider der angegebenen Art durch die kennzeichnenden Merkmale von Patentanspruch 1 gelöst.

Durch die erfindungsgemäße Ausgestaltung des Lamellenprofils ist es möglich, den Wasserablauf des Tropfenabscheiders so zu gestalten, dass die Leistungsdaten von bestehenden Abscheidern im Wesentlichen eingehalten werden können, beispielsweise eine Anströmgeschwindigkeit von 5,4 m/s.

Der Anstellwinkel kann im Vergleich zu bestehenden Abscheidern wesentlich reduziert werden, beispielsweise für Grob- und Feinabscheider auf 10°. Auch lässt sich der Abscheider über entsprechende Spüleinrichtungen im Wesentlichen gleich gut reinigen wie entsprechende Abscheider des Standes der Technik.

Der erfindungsgemäß ausgebildete Tropfenabscheider muss aber nicht unbedingt geneigt sein und kann auch flach (horizontal) ausgebildet bzw. angeordnet sein. Hier ist zwar nur ein geringeres Ablaufvermögen vorhanden, jedoch kann dies bei einer entsprechend groß ausgebildeten Entwässerungsrinne immer noch ausreichend sein.

Die erfindungsgemäße Lösung zeichnet sich durch eine Kombination einer Entwässerungsrinne im unteren Bereich des jeweiligen Strömungskanals mit einer oberhalb der Entwässerungsrinne angeordneten Nase mit Abtropfkante aus. Beide Konfigurationen sind im jeweiligen Strömungskanal angeordnet, der von zwei nebeneinander angeordneten Lamellenprofilen gebildet wird. Sie bewirken, dass das unvermeidliche Aufstauen der Flüssigkeit im Strömungskanal nicht zu einem Tropfenmitriss führt. Dafür ist zum einen die große Entwässerungsrinne vorgesehen. Zum anderen ist die Nase mit Abtropfkante angeordnet, die zur Strömungsführung dient. Die Strömung soll im Bereich dieser Nase definiert ablösen, so dass die aufgestaute Flüssigkeit in die große Entwässerungsrinne des benachbarten Lamellenprofils abtropfen kann. Wenn bei höheren Geschwindigkeiten Tropfen von der Abtropfkante der Nase abgerissen werden, treffen diese auf der gegenüberliegenden Profilseite auf einen strömungsberuhigten Bereich, wodurch auch diese Tropfen in die große Entwässerungsrinne ablaufen können.

Die auf der von der Entwässerungsrinne abgewandten Seite des Lamellenprofils angeordnete Nase ist vorzugsweise so angeordnet, dass sich die Abtropfkante der Nase direkt, d. h. senkrecht über der Öffnung der Entwässerungsrinne befindet. Auf diese Weise kann die aufgestaute Flüssigkeit direkt in die Entwässerungsrinne des benachbarten Profils abtropfen. Andererseits können Tropfen, die von der Abtropfkante mitgerissen werden durch den Strömungskanal auf das benachbarte Profil treffen. Hierdurch werden die Tropfen in einen strömungsberuhigten Bereich transferiert, der sich oberhalb der Entwässerungsrinne befindet, und können von dort ohne weiteres in die Entwässerungsrinne ablaufen. Aus der Gasströmung abgeschiedene Flüssigkeitstropfen, aber auch entsprechende Feststoffpartikel werden daher auf diese Weise gut abgeführt.

Die erfindungsgemäße Anordnung sorgt aber auch für eine gute Abführung bzw. Entwässerung der verwendeten Spülflüssigkeit. Von unten eingeführte Spülflüssigkeit wird über die vorgesehene Nase mit Abtropfkante in die Entwässerungsrinne des benachbarten Profils abgeleitet. Von oben eingeführte Flüssigkeit trifft auf das Lamellenprofil oberhalb der Entwässerungsrinne und läuft am Profil entlang in die Entwässerungsrinne ab.

Die hier verwendeten Begriffe "oben, unten, oberhalb, unterhalb" beziehen sich auf eine Querschnittsdarstellung des Tropfenabscheiders bzw. mehrerer benachbarter Lamellenprofile mit dazwischen angeordneten Strömungskanälen. Die Profile sind hierbei vertikal angeordnet, können aber in Längsrichtung horizontal oder geneigt ausgebildet sein.

Insbesondere bei einer Schrägstellung der gewünschten Lamellenprofile kann somit die vorgesehene Entwässerungsrinne sowohl die aus dem Gasstrom abgeschiedene Flüssigkeit als auch Sprühflüssigkeit von unten und oben einwandfrei bis zum unteren Längsende der entsprechenden Lamelle und von dort beispielsweise in einen geeigneten Sammelbehälter abführen. Dies funktioniert auch bei einem relativ niedrigen Anstellwinkel der Lamellenprofile, der beispielsweise 10° oder weniger betragen kann.

Ein gewünschter Reinigungseffekt wird durch die Spülflüssigkeit von oben oder unten erreicht, da die von oben eingeführte Flüssigkeit insbesondere auf die Profilseite trifft, auf der sich die Entwässerungsrinne befindet, und somit den Profilbereich über der Entwässerungsrinne reinigt. Die von unten eingeführte Spülflüssigkeit trifft im Wesentlichen auf die andere Profilseite, auf der sich die nach unten gerichtete Nase befindet und reinigt daher diese Profilseite zur Nase, von wo aus die Flüssigkeit ebenfalls in die Entwässerungsrinne des benachbarten Profils abgeführt wird.

Bei dem hier beschriebenen Tropfenabscheider besitzt das Lamellenprofil eine obere und eine untere Umlenkstelle. Die Entwässerungsrinne befindet sich hierbei vorzugsweise unterhalb der unteren Umlenkstelle. Die Nase mit Abtropfkante ist dabei an oder geringfügig unter der oberen Umlenkstelle angeordnet.

Dabei wird insgesamt eine Lamellenform bevorzugt, bei der die zwischen den Lamellenprofilen angeordneten Strömungskanäle im Querschnitt einen oberen und unteren vertikalen Bereich und einen mittleren Schrägbereich aufweisen. Die Entwässerungsrinne befindet sich daher bei dieser Ausführungsform unterhalb des Schrägbereiches, vorzugsweise direkt unterhalb desselben, und zwar auf der konvexen Seite des Lamellenprofils, so dass einerseits die Flüssigkeit auf dieser konvexen Seite in die Entwässerungsrinne ablaufen kann und andererseits Flüssigkeit auf der konkaven Seite, insbesondere von der mit der Abtropfkante versehenen Nase, in die Entwässerungsrinne des benachbarten Profils abtropfen kann.

Was die vorgesehene Nase mit Abtropfkante anbetrifft, so dient diese vorzugsweise sowohl zur Strömungsführung als auch als Abtropfelement. Vorzugsweise erstreckt sich hierbei die Nase schräg nach unten, und zwar besonders bevorzugt etwa parallel zur Achse des Strömungskanals im mittleren Schrägbereich, wobei bei einer besonders bevorzugten Ausführungsform die Nase nach unten konvex gekrümmt ausgebildet ist. Diese Ausführungsform erscheint für die Strömungsführung sowie die Strömungsablösung optimal.

Es versteht sich, dass die hier in Rede stehenden Lamellenprofile an ihren Umlenkstellen vorzugsweise gekrümmt ausgebildet sind, um glatte Übergänge zu erreichen.

Ferner besitzt das Lamellenprofil in seinem oberen Bereich auf der anderen Seite wie die Entwässerungsrinne eine im jeweiligen Strömungskanal angeordnete zweite Entwässerungsrinne mit Öffnung nach oben. Diese zweite obere Entwässerungsrinne ist so ausgebildet bzw. angeordnet, dass Tropfen, die von der Abtropfkante der vorgesehenen Nase mitgerissen werden und in einem nicht strömungsberuhigten Bereich der Lamellenprofile aufkommen und als Film nach oben in Richtung Profilaustritt geschleppt werden, in diese zweite Entwässerungsrinne gelangen. Die entsprechende Flüssigkeit kann dann über diese zweite Entwässerungsrinne ebenfalls zum unteren Längsende des Lamellenprofils abgeführt werden.

Um diesen Effekt zu begünstigen, weist die zweite Entwässerungsrinne vorzugsweise eine profilseitige Begrenzungswand auf, die kürzer ausgebildet ist als ihre äußere Begrenzungswand. Hierdurch kann die Flüssigkeit aus dem Inneren des Strömungskanales in die zweite Entwässerungsrinne gelangen, ohne über die Oberkante des Lamellenprofils zu treten.

Die zweite Entwässerungsrinne ist vorzugsweise direkt oberhalb der Nase angeordnet, jedoch, wie bereits erwähnt, auf der anderen Seite des Lamellenprofils.

Insgesamt ist das Lamellenprofil so gestaltet, dass die vorgesehene Tropfenabscheiderspülung vorzugsweise an jede Stelle des Profils gelangen kann.

Wie bereits erwähnt, betrifft der hier beschriebene Tropfenabscheider vorzugsweise V-förmig und/oder dachförmig angeordnete Lamellenprofilpakete. Dies schließt jedoch nicht aus, dass auch andere Anordnungen Verwendung finden können, beispielsweise Abscheider mit lediglich einseitig geneigten Lamellenprofilpaketen oder solche mit flach angeordneten Lamellenprofilpaketen.

Die Erfindung betrifft ferner eine Tropfenabscheiderlamelle, die als Lamellenprofil der vorstehend beschriebenen Art ausgebildet ist.

Die Erfindung wird nachfolgend anhand von Ausführungsbeispielen in Verbindung mit der Zeichnung im Einzelnen erläutert. Es zeigen:
- Figur 1: eine schematische Ansicht eines Tropfenabscheiders mit einer oberen dachförmigen und einer unteren V-förmigen Tropfenabscheiderlage;
- Figur 2: eine schematische Seitenansicht eines Lamellenprofils der unteren Tropfenabscheiderlage der Figur 1;
- Figur 3: einen Querschnitt durch zwei nebeneinander angeordnete Lamellenprofile des Tropfenabscheiders;
- Figur 4: die Lamellenprofile der Figur 3 mit angedeuteter Tropfenabscheidung; und
- Figur 5: zwei nebeneinander angeordnete Lamellenprofile einer weiteren Ausführungsform mit angedeuteter Tropfenabscheidung.

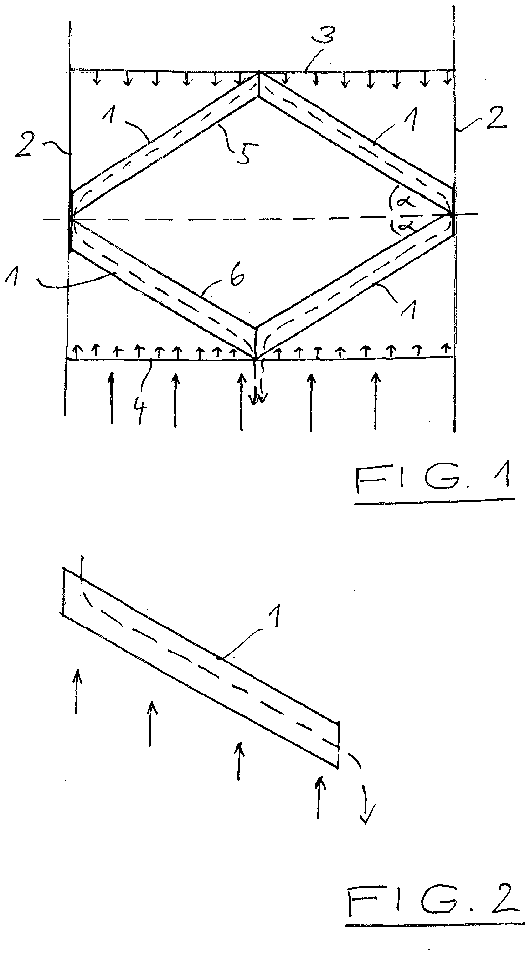

Figur 1 zeigt eine Ansicht eines in einem Rauchgaswäscher angeordneten Tropfenabscheiders, der über seitliche Stützkonstruktionen 2 an einer einzigen Trägerlage (nicht gezeigt) angeordnet ist. Der Tropfenabscheider umfasst eine obere dachförmig ausgebildete Tropfenabscheiderlage 5 und eine untere V-förmig ausgebildete Tropfenabscheiderlage 6. Beide Lagen besitzen gegeneinander gestellte Pakete von einzelnen parallel zueinander angeordneten Lamellenprofilen 1, die unter einem Anstellwinkel α zur Horizontalen angeordnet sind.

Die beiden seitlichen Stützkonstruktionen 2 tragen ferner obere Spüleinrichtungen 3 und untere Spüleinrichtungen 4, mit denen die Tropfenabscheiderlagen zu Reinigungszwecken mit Sprühwasser beaufschlagt werden. Der Tropfenabscheider dient zur Abscheidung von Flüssigkeitstropfen und Feststoffpartikeln aus einem Gasstrom, der in Figur 1 von unten nach oben gerichtet ist und die zwischen den einzelnen Lamellenprofilen gebildeten Strömungskanäle durchströmt.

Im Betrieb des Tropfenabscheiders erfolgt eine Umlenkung des Gasstromes in den Strömungskanälen, wodurch Tropfen und Feststoffpartikel an den Lamellenprofilen abgeschieden werden. Durch die geneigte Anordnung der einzelnen Lamellenprofilpakete werden die abgeschiedenen Tropfen und Partikel am unteren Grobabscheider zur Mitte hin abgeführt, während sie am oberen Feinabscheider seitlich nach außen abgeführt werden. Entsprechendes passiert mit dem zu Reinigungszwecken eingesetzten Spülwasser.

Der hier dargestellte Tropfenabscheider hat durch die Rautenform der beiden Tropfenabscheiderlagen die Besonderheit, dass die an der oberen Tropfenabscheiderlage 5 abgeschiedene Flüssigkeit sowie das entsprechende Spülwasser entlang den Lamellenprofilen seitlich nach außen und unten strömt und am unteren Ende der Lamellenprofile auf die Profile der unteren Tropfenabscheiderlage 6 gelangt und von dort nach innen und unten zur Mitte strömt und von dort abtropft. Hierdurch wird ein besonders guter Reinigungseffekt erzielt.

Figur 2 zeigt eine Seitenansicht eines einzelnen Lamellenprofiles 1, wobei hier gestrichelt der Weg der abgeschiedenen Flüssigkeit und des Spülwassers dargestellt ist.

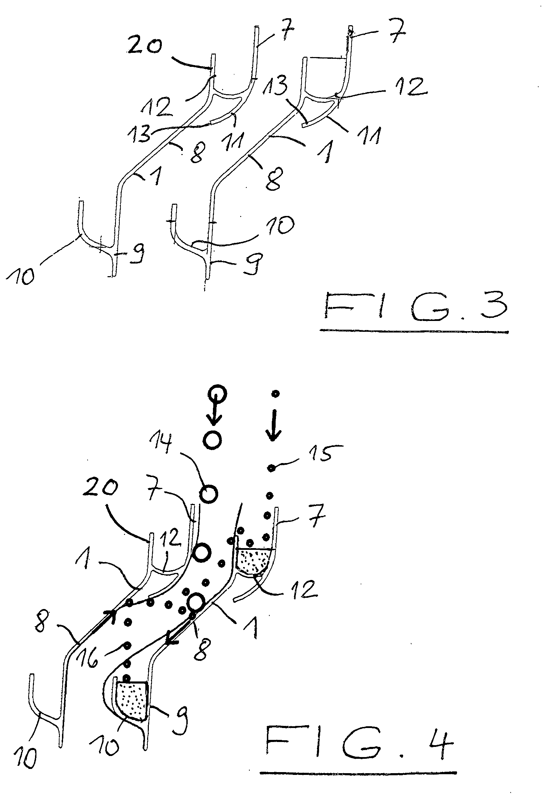

Figur 3 zeigt zwei Lamellenprofile 1 einer ersten Ausführungsform im Querschnitt. Jedes Lamellenprofil besitzt einen oberen geradlinigen vertikalen Abschnitt 20, einen mittleren geradlinigen Schrägabschnitt 8 und einen unteren vertikalen geradlinigen Abschnitt 9. Diese Abschnitte sind über zwei gekrümmte Umlenkstellen miteinander verbunden. Auf diese Weise wird zwischen den einzelnen Lamellenprofilen jeweils ein Strömungskanal gebildet, der die von unten nach oben geführte Gasströmung an zwei Stellen umlenkt und auf diese Weise einen entsprechenden Abscheidungseffekt bewirkt.

Am unteren geradlinigen Abschnitt 9 des Lamellenprofils 1 ist eine Entwässerungsrinne 10 angeordnet, die durch einen in den Strömungskanal reichenden Abschnitt des Lamellenprofils gebildet ist. An der oberen Umlenkstelle des Lamellenprofils befindet sich auf der von der Entwässerungsrinne 10 abgewandten Seite eine nach unten in den Strömungskanal vorstehende Nase 11 mit Abtropfkante 13. Die Nase 11 ist leicht gekrümmt ausgebildet und verläuft etwa parallel zur Schräge des mittleren Abschnittes 8.

Ferner befindet sich am oberen geradlinigen Abschnitt 20 des Lamellenprofils eine zweite Entwässerungsrinne 12, deren durch den Abschnitt 20 gebildete profilseitige Begrenzungswand kürzer ausgebildet ist als die andere äußere Begrenzungswand 7.

Figur 4 zeigt die Ausführungsform der Figur 3 mit angedeuteten Tropfen. Die kleinen Tropfen 16 bezeichnen die aus der Gasströmung abgeschiedenen Tropfen, die durch das Auftreffen der von unten nach oben gerichteten Gasströmung auf die Schrägseite 8 eines Lamellenprofils 1 abgeschieden werden und entweder direkt in die Entwässerungsrinne 10 tropfen oder auf den Schrägbereich 8 des benachbarten Lamellenprofils treffen und von dort am Profil entlang nach unten fließen und in die Entwässerungsrinne 10 gelangen. Tropfen, die weiter nach oben mitgerissen werden, gelangen über die kurze Begrenzungswand in die obere Entwässerungsrinne 12.

Mit 14 sind große Flüssigkeitstropfen bezeichnet, bei denen es sich beispielsweise um Regentropfen oder Spülwassertropfen handelt, die von oben in die entsprechenden Strömungskanäle gelangen. Die großen Tropfen treffen hierbei direkt auf den Schrägbereich 8 eines Lamellenprofils auf und wandern von dort entlang dem Profil in die untere Entwässerungsrinne 10. Weitere kleinere Tropfen, die von oben in den Strömungskanal gelangen, sind mit 15 bezeichnet. Diese hier im Strömungsschatten sich nach unten bewegenden Tropfen werden von der oberen Entwässerungsrinne 12 aufgefangen.

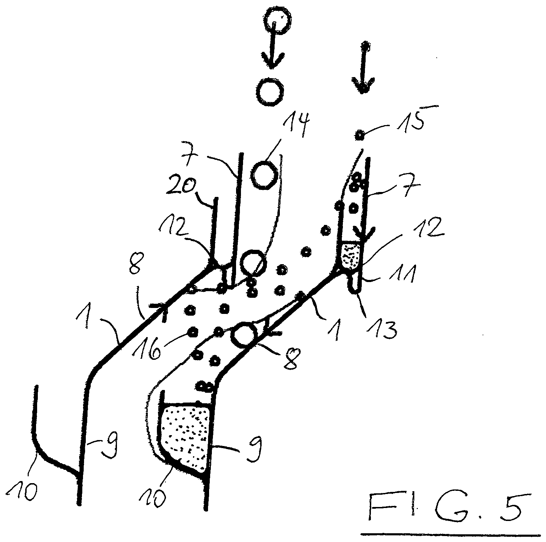

Figur 5 zeigt eine mit Figur 4 vergleichbare Darstellung. Die hier gezeigten Lamellenprofile 1 unterscheiden sich von denen der Figuren 3 und 4 im Wesentlichen nur dadurch, dass die vorstehende Nase mit Abtropfkante 13 hier sich senkrecht nach unten erstreckt. Im Übrigen weisen auch diese Lamellenprofile 1 eine untere große Entwässerungsrinne 10 (1. Entwässerungsrinne) und eine obere kleine Entwässerungsrinne 12 (2. Entwässerungsrinne) auf. Die Funktionsweise der in Figur 5 dargestellten Ausführungsform entspricht der der Ausführungsform der Figuren 3 und 4.

## Patentansprüche

1. Tropfenabscheider mit einer Vielzahl von nebeneinander angeordneten Lamellenprofilen (1), die zwischen sich Strömungskanäle für eine feststoff- und/oder flüssigkeitsbeladene Gasströmung bilden, wobei jedes Lamellenprofil (1) mit einer im unteren Bereich des jeweiligen Strömungskanals angeordneten ersten Entwässerungsrinne (10) mit Öffnung nach oben versehen ist,
die Lamellenprofile (1) eine obere und eine untere Umlenkstelle aufweisen, so dass Strömungskanäle gebildet werden, die im Querschnitt einen oberen und unteren vertikalen Bereich und einen mittleren Schrägbereich aufweisen,
die Lamellenprofile (1) auf ihrer von der ersten Entwässerungsrinne (10) abgewandten Seite oberhalb der ersten Entwässerungsrinne (10) eine in den jeweiligen Strömungskanal vorstehende Nase (11) mit Abtropfkante (13) umfassen, die so ausgebildet ist,
dass sie ein Abtropfen der aufgestauten Flüssigkeit in die erste Entwässerungsrinne (10) des benachbarten Lamellenprofils (1) verursacht,
im oberen Bereich der Lamellenprofile (1) auf der anderen Seite wie die erste Entwässerungsrinne (10) eine im jeweiligen Strömungskanal angeordnete zweite Entwässerungsrinne (12) mit Öffnung nach oben vorgesehen ist, die direkt oberhalb der Nase (11) angeordnet ist, und
die beiden Entwässerungsrinnen (10, 12) zur Abführung der aufgefangenen Flüssigkeit zu ihren Längsenden ausgebildet sind,
**dadurch gekennzeichnet, dass**
die erste Entwässerungsrinne (10) unterhalb der unteren Umlenkstelle angeordnet ist und sich die Nase (11) mit Abtropfkante (13) an der oder geringfügig unter der oberen Umlenkstelle befindet und sich nach unten erstreckt.

2. Tropfenabscheider nach Anspruch 1, **dadurch gekennzeichnet, dass** sich die Nase (11) schräg nach unten erstreckt.

3. Tropfenabscheider nach Anspruch 2, **dadurch gekennzeichnet, dass** die Nase (11) etwa parallel zur Achse des Strömungskanales im mittleren Schrägbereich (8) verläuft.

4. Tropfenabscheider nach Anspruch 1, **dadurch gekennzeichnet, dass** die Nase (11) zur Strömungskanalachse hin konvex gekrümmt ausgebildet ist.

5. Tropfenabscheider nach Anspruch 1, **dadurch gekennzeichnet, dass** sich die Nase (11) senkrecht nach unten erstreckt.

6. Tropfenabscheider nach einem der vorangehenden Ansprüche, **dadurch gekennzeichnet, dass** die zweite Entwässerungsrinne (12) eine profilseitige Begrenzungswand aufweist, die kürzer ist als ihre andere äußere Begrenzungswand (7).

7. Tropfenabscheider nach einem der vorangehenden Ansprüche, **dadurch gekennzeichnet, dass** er V-förmig und/oder dachförmig angeordnete Lamellenprofilpakete umfasst.

## Claims

1. A mist eliminator comprising a large number of vane profiles (1) that are arranged one next to the other and that form flow channels between them for a gas flow loaded with solids and/or liquids, wherein each vane profile (1) is provided with a first upwardly opening drainage channel (10) arranged in the lower region of the relevant flow channel,
the vane profiles (1) comprise an upper and a lower deflection point so as to form flow channels that have a vertical upper and lower region and an oblique central region in cross-section,
the vane profiles (1) comprise, on the side thereof facing away from the first drainage channel (10) and above the first drainage channel (10), a nose (11) that has a drip edge (13), projects into the relevant flow channel and is designed such that it causes accumulated liquid to drip into the first drainage channel (10) of the adjacent vane profile (1),
a second upwardly opening drainage channel (12) that is arranged in the relevant flow channel directly above the nose (11) is provided in the upper region of the vane profiles (1) on the other side to the first drainage channel (10), and
the two drainage channels (10, 12) are designed to guide collected liquid away to their longitudinal ends,
**characterized in that**
the first drainage channel (10) is arranged below the lower deflection point and the nose (11) having the drip edge (13) is located at or just below the upper deflection point and extends downwards.

2. The mist eliminator according to claim 1, **characterized in that** the nose (11) extends obliquely downwards.

3. The mist eliminator according to claim 2, **characterized in that** the nose (11) extends approximately parallel to the axis of the flow channel in the oblique central region (8).

4. The mist eliminator according to claim 1, **characterized in that** the nose (11) is designed to be convexly curved towards the flow channel axis.

5. The mist eliminator according to claim 1, **characterized in that** the nose (11) extends vertically downwards.

6. The mist eliminator according to any one of the preceding claims, **characterized in that** the second drainage channel (12) comprises a profile-side delimiting wall that is shorter than its other outer delimiting wall (7).

7. The mist eliminator according to any one of the preceding claims, **characterized in that** it comprises vane profile packs that are arranged in a V-shape and/or roof-shape.

## Revendications

1. Séparateur de gouttes comprenant une pluralité de profils de lamelle (1) disposés côte à côte, lesquels forment entre eux des canaux d'écoulement pour un flux de gaz chargé de matières solides et/ou de liquide, dans lequel chaque profil de lamelle (1) est pourvu d'une première gouttière de drainage (10) ouverte vers le haut, disposée dans la région inférieure du canal d'écoulement respectif,
- les profils de lamelle (1) présentent un point de déviation supérieur et inférieur, de manière à former des canaux d'écoulement présentant une région verticale supérieure et inférieure et une région oblique centrale dans leur section transversale,
- sur leur côté opposé à la première gouttière de drainage (10), au-dessus de la première gouttière de drainage (10), les profils de lamelle (1) comportent un nez (11) faisant saillie dans le canal d'écoulement respectif avec une arête d'égouttage (13) conçue de manière à entraîner un égouttage du liquide accumulé dans la première gouttière de drainage (10) du profil de lamelle (1) voisin,
- dans la région supérieure des profils de lamelle (1), sur l'autre côté par rapport à la première gouttière de drainage (10), il est prévu une deuxième gouttière de drainage (12) ouverte vers le haut, disposée dans le canal d'écoulement respectif, laquelle est disposée directement au-dessus du nez (11), et
- les deux gouttières de drainage (10, 12) sont conçues pour évacuer le liquide recueilli vers leurs extrémités longitudinales,
**caractérisé en ce que**
- la première gouttière de drainage (10) est disposée sous le point de déviation inférieur et le nez (11) avec l'arête d'égouttage (13) se situe au niveau du point de déviation supérieur ou légèrement en dessous de celui-ci et s'étend vers le bas.

2. Séparateur de gouttes selon la revendication 1, **caractérisé en ce que** le nez (11) s'étend obliquement vers le bas.

3. Séparateur de gouttes selon la revendication 2, **caractérisé en ce que** le nez (11) se développe à peu près parallèlement à l'axe du canal d'écoulement dans la région oblique centrale (8).

4. Séparateur de gouttes selon la revendication 1, **caractérisé en ce que** le nez (11) est conçu incurvé de manière convexe vers l'axe de canal d'écoulement.

5. Séparateur de gouttes selon la revendication 1, **caractérisé en ce que** le nez (11) s'étend perpendiculairement vers le bas.

6. Séparateur de gouttes selon l'une des revendications précédentes, **caractérisé en ce que** la deuxième gouttière de drainage (12) présente une paroi de délimitation côté profil, laquelle est plus courte que son autre paroi de délimitation extérieure (7).

7. Séparateur de gouttes selon l'une des revendications précédentes, **caractérisé en ce que** celui-ci comporte des paquets de lamelles disposés en forme de V et/ou en forme de toit.
